# EUROPEAN PATENT SPECIFICATION

(11) **EP 3 838 468 B1**
(45) Date of publication and mention of the grant of the patent: **26.02.2025**
(21) Application number: 20213486.2
(22) Date of filing: 11.12.2020
(51) Int. Cl.: B23K 9/26, B23K 9/32, B23K 9/10, B23K 9/173, B23K 9/29

(54) **METHODS AND SYSTEMS FOR GAS CONTROL DURING WELDING WIRE PRETREATMENTS**
VERFAHREN UND SYSTEME ZUR GASSTEUERUNG BEI SCHWEISSDRAHTVORBEHANDLUNGEN
PROCÉDÉS ET SYSTÈMES DE COMMANDE DE GAZ PENDANT LES PRÉTRAITEMENTS DE FILS DE SOUDAGE

(30) Priority: 20.12.2019 US 201916723511
(43) Date of publication of application: 23.06.2021
(73) Proprietor: Illinois Tool Works Inc., Glenview, IL 60025 (US)
(72) Inventor: HOEGER, Michael V., Illinois, 60025 (US); SCHNEIDER, Joseph C., Illinois, 60025 (US)
(74) Representative: HGF

(56) References cited:
- CN-A- 1 593 830
- CN-A- 101 862 886
- JP-A- S60 130 475
- US-A- 2 836 701

## Description

### BACKGROUND

This disclosure relates generally to welding and, more particularly, to methods, systems, and apparatuses for pre-treating a wire of a welding implement to reduce the amount of hydrogen in solidified welds and to make such welds less susceptible to hydrogen induced cracking (HIC) and hydrogen embrittlement. More specifically, this disclosure relates to methods, systems, and apparatuses for controlling and utilizing gas flow during such pre-treating operations.

Welding is a process that has increasingly become ubiquitous in all industries. Welding is, at its core, simply a way of bonding two pieces of metal. A wide range of welding systems and welding control regimes have been implemented for various purposes. In continuous welding operations, metal inert gas (MIG) welding and submerged arc welding (SAW) techniques allow for formation of a continuing weld bead by feeding welding electrode wire shielded by inert gas from a welding torch and/or by flux. Such wire feeding systems are available for other welding systems, such as tungsten inert gas (TIG) welding. Electrical power is applied to the welding wire and a circuit is completed through the workpiece to sustain a welding arc that melts the electrode wire and the workpiece to form the desired weld.

US-2836701-A (describing the preamble of claims 1 and 7 respectively) discloses a method of gas-shielded metal arc welding in which the electrode is heated away from the arc zone to dehydrogenate the electrode.

JP-S60130475-A discloses a MIG welding method in which a welding wire is heated by a heat source and receives electricity from an electrode chip, by which air shielded arc welding is accomplished in a gaseous argon atmosphere. The vapor of the moisture adsorbed on the wire and the evaporating hydrogen molecules generated as a result of heating by the heat source are delivered to an outside part by gaseous argon admitted into the introducing part of the chip, by which the intrusion thereof into the arc weld zone is prevented.

### SUMMARY

The scope of the present invention is defined by the appended claims.

A first aspect of the present invention defines a method of removing hydrogen from a filler wire that is utilized in a welding operation according to claim 1.

A second aspect of the present invention defines a welding system according to claim 7, comprising a torch having a distal end, through which a filler wire extends. The filler wire passes into and through the torch in a downstream direction toward the distal end. As the filler wire passes from a spool into and through the torch, it passes through a pre-treatment, or cleaning, chamber and a shielding gas chamber. At a given time during a welding operation, the pre-treatment chamber surrounds at least a portion of the wire and the shielding gas chamber surrounds at least a portion of the wire. The shielding gas chamber has a gas inlet and a gas outlet. The outlet of the shielding gas chamber is configured such that the shielding gas exiting the shielding gas chamber flows around the portion of the wire that extends from the distal end of the torch. For instance, the outlet of the shielding gas chamber may generally correspond with the distal end of the torch. The pre-treatment chamber also comprises a gas inlet and a gas outlet. The gas outlet of the pre-treatment chamber, however, is isolated from the shielding gas chamber.

According to the present invention, the gas outlet of the pre-treating chamber is configured so that the gas exiting the pre-treatment chamber is directed away from the weld pool, i.e. away from the portion of the wire extending from the distal end of the torch. This may involve venting the gas from the pre-treatment chamber to the atmosphere at a distance from the distal end of the torch and in a direction different from the downstream flow direction of the shielding gas. Alternatively, the gas exiting the pre-treatment chamber may be transported to a collection unit, recycled, or the like.

In some embodiments, the gas outlet of the pre-treatment chamber is isolated from the shielding gas chamber by the pre-treatment chamber being at least partially nested within at least a portion of the shielding gas chamber. In such embodiments, the gas outlet of the pre-treating chamber may include one or more bypass ducts extending through the shielding gas chamber. In this way, the spent pre-treatment gas may be transported through the shielding gas chamber without the spent pre-treatment gas mixing with the shielding gas. In other embodiments, the gas outlet of the pre-treatment chamber is isolated from the shielding gas chamber by the pre-treatment chamber being positioned upstream of the shielding gas chamber. The downstream end of the pre-treatment chamber may be separated from the upstream end of the shielding gas chamber by one or more baffles and/or by any other equipment which may serve to fluidly isolate the two chambers.

In some embodiments, the pre-treatment chamber and the shielding gas chamber may both be positioned within a body of the torch.

In some embodiments, the gas inlet of the pre-treatment chamber and the inlet of the shielding gas chamber may be operatively connected, e.g. fluidly connected, such that a gas line attached to a single connection port can supply gas to both chambers. In this way, a single gas supply may be used as both the pre-treatment gas and the shielding gas. In some embodiments, the gas inlet of the pre-treatment chamber and the inlet of the shielding gas chamber may be distinct from one another, such that the gas supplied to the pre-treatment chamber may be of a different composition than the gas supplied to the shielding gas chamber. For example, the gas inlet of the pre-treatment chamber may be configured to be connected to a first gas line and the inlet of the shielding gas chamber may be configured to be connected to a second gas line. In some embodiments, the system may be configured so that a user may select whether to use a single gas attachment or two separate gas attachments.

In some embodiments, the pre-treatment chamber may be configured to resistively pre-heat an electrode wire, such as through a wire pre-heating circuit. The wire pre-heating circuit may comprise a first contact tip, a second contact tip, and a section of the electrode wire between the first and second contact tips. In some embodiments, the pre-treatment chamber may be configured to etch a filler wire, such as an aluminum wire. For instance, the pre-treatment chamber may comprise one or more electrodes, e.g. tungsten electrodes, arranged and configured to etch a surface layer of the filler wire.

Further preferred embodiments of the first and second aspects of the present invention are defined in the dependent claims.

In some embodiments, the gas flowing through the pre-treatment chamber may be caused to have a Reynolds number of at least 2100, alternatively at least 2500, alternatively at least 2800, alternatively at least 3000, alternatively at least 3500, alternatively at least 4000. The gas flowing through the pre-treatment chamber may be acted upon in order to bring about a desired degree of turbulence by in any number of ways, including for example impinging the flow of gas at or near a gas inlet of the pre-treatment chamber, such as by flowing the gas through an area of decreased cross-section, placing one or more obstructions within the flow-path of the gas, passing the gas past one or more roughened or textured surfaces, or the like.

In some embodiments, the treating of the wire involves pre-heating the wire to remove hydrogen and/or other contaminants. The pre-heating may involve a resistive pre-heating, in which a wire pre-heating circuit is created. The wire pre-heating circuit may include the connection of first and second contact tips to the wire in a spaced apart relationship. In some embodiments, the treating of the wire involves etching the surface of a wire, e.g. etching the surface of an aluminum wire, to remove hydrogen and/or other contaminants. The etching may involve the use of one or more electrodes, e.g. tungsten electrodes.

### BRIEF DESCRIPTION OF THE DRAWINGS

The following is a description of the examples depicted in the accompanying drawings. The figures are not necessarily to scale, and certain features and certain views of the figures may be shown exaggerated in scale or in schematic in the interest of clarity or conciseness.
Figure 1 illustrates an embodiment of a system for pre-heating a welding wire.
Figure 2 illustrates an embodiment of a system for etching a welding wire.

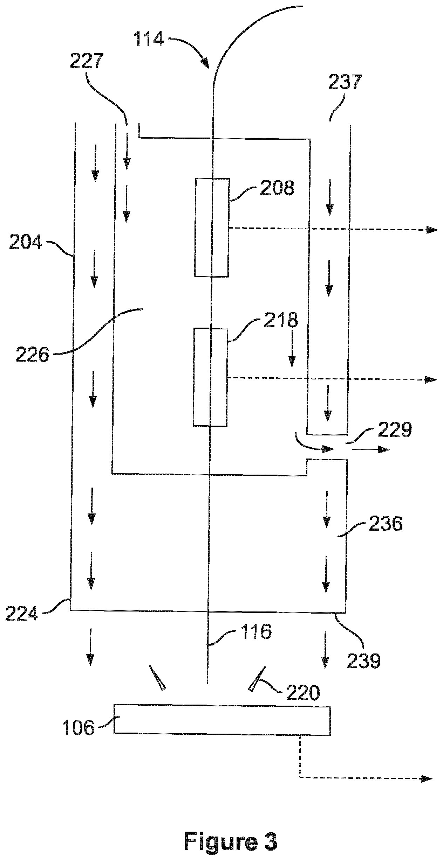

Figure 3 illustrates an embodiment of a system for pre-heating a welding wire, in which the gas outlet of a pre-heating chamber is isolated from the shielding gas chamber.
Figure 4 illustrates an embodiment of a system for cleaning a welding wire via a pre-treatment (e.g. pre-heating, etching) in which the gas exiting a cleaning chamber is isolated from the shielding gas, the cleaning chamber being at least partially nested within the shielding gas chamber, and the gas inlet for the cleaning chamber being fluidly connected to the gas inlet for the shielding gas chamber.
Figure 5 illustrates an embodiment of a system for cleaning a welding wire via a pre-treatment (e.g. pre-heating, etching) in which the gas exiting a cleaning chamber is isolated from the shielding gas, the cleaning chamber being at least partially nested within the shielding gas chamber, and the gas inlet for the cleaning chamber being independent from the gas inlet for the shielding gas chamber.
Figure 6 illustrates an embodiment of a system for cleaning a welding wire via a pre-treatment (e.g. pre-heating, etching) in which the gas exiting a cleaning chamber is isolated from the shielding gas, the cleaning chamber being positioned upstream from the shielding gas chamber, and the gas inlet for the cleaning chamber being fluidly connected to the gas inlet for the shielding gas chamber.
Figure 7 illustrates an embodiment of a system for cleaning a welding wire via a pre-treatment (e.g. pre-heating, etching) in which the gas exiting a cleaning chamber is isolated from the shielding gas, the cleaning chamber being positioned upstream from the shielding gas chamber, and the gas inlet for the cleaning chamber being independent from the gas inlet for the shielding gas chamber.
Figure 8 illustrates an embodiment of a system for etching a welding wire, in which the gas outlet of an etching chamber is isolated from the shielding gas chamber.
Figure 9 illustrates the creation of a thin viscous layer at the surface of a wire when a pre-treatment gas is brought to turbulent flow.
Figure 10 illustrates the differing mechanisms of transport associated with the flow conditions shown in Figure 9.

The figures are not necessarily to scale. Where appropriate, similar or identical reference numbers are used to refer to similar or identical features.

### DETAILED DESCRIPTION

In the following detailed description, specific details may be set forth in order to provide a thorough understanding of embodiments of the present disclosure. However, it will be clear to one skilled in the art when disclosed examples may be practiced without some or all of these specific details. For the sake of brevity, well-known features or processes may not be described in detail. In addition, like or identical reference numerals may be used to identify common or similar elements.

Hydrogen embrittlement is a process by which metals lose toughness, become brittle, and/or fracture due to the presence and diffusion of hydrogen. The pressure on the workpiece, caused at least in part by hydrogen introduced by a filler wire such as welding electrodes, can build up. When the pressure exceeds a threshold level, the workpiece can crack in a mechanism referred to as hydrogen-induced cracking. Through the process of welding, metals can pick up hydrogen through the usage of welding filler materials which have been exposed to moisture and/or otherwise forming hydrocarbons.

Tubular welding wire generally provide more difficulties than solid welding wire in controlling the level of moisture during manufacture, and may have more tendency to pick up moisture during storage and/or field use. When welding with seamed wire, an operator and/or other material handling personnel must take extra care to avoid submitting filler material to sources which can increase risk of hydrogen cracking. Common seamed wires which are often used in applications such as shipbuilding, pipelines, and/or structural welding, which can be susceptible to hydrogen cracking, include FabCO XI,550 (E71T-1CJ/-9CJ/-12CJ H4), Fabshield 81N1 (E71T8-Ni1 J H8), and FabCOR 86R (E70C-6M H4).

Aluminum welding wire is highly reactive, and forms a surface oxide layer when exposed to atmospheric conditions. The oxide layer contains significant amounts of water from atmospheric humidity. The water provides a source of hydrogen, which can cause porosity in an aluminum weld.

The welding systems described herein may form a weld (e.g., at a weld joint) between two components in a weldment by any known electric welding techniques. Known electric welding techniques include, inter alia, shielded metal arc welding (SMAW), MIG, flux-cored arc welding (FCAW), TIG, laser welding, sub-arc welding (SAW), stud welding, friction stir welding, and resistance welding. MIG, TIG, hot wire cladding, hot wire TIG, hot wire brazing, multiple arc applications, and SAW welding techniques, inter alia, may involve automated or semi-automated external metal filler (e.g., via a wire feeder). Optionally, in any embodiment, the welding equipment may be arc welding equipment having one or more power supplies, and associated circuitry, that provides a direct current (DC), alternating current (AC), or a combination thereof to an electrode wire of a welding tool. The welding tool may be, for example, a TIG torch, a MIG torch, or a flux cored torch (commonly called a MIG "gun"). The electrode wire may be tubular-type electrode, a solid type wire, a flux-core wire, a seamless metal core wire, and/or any other type of electrode wire.

As used herein, a wire-fed welding system refers to a system capable of performing welding (e.g., gas metal arc welding (GMAW), gas tungsten arc welding (GTAW), submerged arc welding (SAW), etc.), brazing, cladding, hardfacing, and/or other processes, in which a filler metal is provided by a wire that is fed to a work location, such as an arc or weld puddle.

Embodiments of the present disclosure are directed to pretreatment of a welding wire, i.e., treatment of a filler wire in the travel path of the wire and prior to a welding arc and/or deposition. The pretreatment may include preheating, etching, or a combination thereof. As used herein, preheating refers to heating a wire prior to a welding arc and/or deposition. As used herein, etching refers to the removal of a surface layer of a wire, e.g. the removal of an oxide layer of an aluminum wire. The pretreatment may take place within a welding tool itself, e.g. within a torch or gun, or within a separate component, e.g. within a component that is independent of the welding tool. Because the pretreatment releases hydrogen from the wire, the pretreatment takes place in what is referred to herein as a cleaning chamber or a pre-cleaning chamber.

### Resistive Pre-heating methods and systems

Disclosed examples involve resistively preheating the electrode wire after unwinding from the wire spool and prior to the arc. For example, the electrode wire may be preheated via contact points located at any two points between the wire source and the arc. The contact points may be implemented using any technique to establish electrical contact with the electrode wire, such as contact tips, conductive brushes, and/or conductive rollers. Some other disclosed examples involve resistively preheating the wire during the wire drawing (e.g., manufacturing) process to immediately reduce the hydrogen in the drawn wire. Disclosed examples therefore are capable of delivering wire to welding applications that substantially reduce risks of cracking and embrittlement in welds that use the preheated wire.

Disclosed examples include one or more preheating circuits in addition to a welding circuit, which are controlled to provide current to preheat the electrode. Preheating a welding electrode provides a number of potential benefits, which are described in U.S. Patent Application No. 15/343,992, filed November 4, 2016, and entitled "Systems, Methods, and Apparatus to Preheat Welding Wire." In addition to provide such benefits, disclosed examples use one or more preheating circuits to reduce the hydrogen content in a welding wire by increasing the rate of hydrogen diffusion from the wire.

In some examples, the preheating circuit includes multiple contact points (e.g., welding torch contact tips, and/or other contact points), which may be positioned in contact with the electrode wire at the welding torch, at a wire feeder, between the wire feeder and the welding torch, and/or any combination of the welding torch, the wire feeder, or between the welding torch and the wire feeder. In some examples, a welding system includes multiple preheating circuits. Different preheating circuits may provide different levels of preheating current. For example, the electrode wire fed from a wire spool may be provided with a first, low preheating current to increase the temperature of the wire to encourage hydrogen diffusion, while maintaining sufficient column strength for feeding the wire without buckling. When the wire approaches the torch, a higher preheating current is applied to increase the wire temperature closer to a melting point of the wire. The currents applied by each of the preheating circuits may be superimposed (e.g., additive or subtractive) in section(s) of the electrode wire, superimposed (e.g., additive or subtractive) at one or more contact tips or other contact points, or non-overlapping. Additionally or alternatively, the welding current may be superimposed on one or more preheating currents and/or non-overlapping with the preheating current(s).

Disclosed examples control the preheating current in the wire via control loops (e.g., voltage-controlled loops, current-controlled loops, etc.) to reduce the level of hydrogen in a consistent manner over a relatively short period of time compared to conventional baking and compared to conventional extended stickout techniques. In some examples, the preheating current is controlled based on aspects of the wire such as wire type, wire composition, and/or wire diameter, a length of the wire path from the wire feeder to the arc, wire feed speed, and/or any other control variables affecting hydrogen diffusion. A look-up table can be implemented to recall optimum preheat parameters for certain types of tubular wire and wire feed rate.

In some examples, a hydrogen sensor may be added to monitor the level of hydrogen. For example, Palladium (Pd) based (e.g., Pd-functionalized) carbon nanotube (CNT), a diode-based Schottky sensor with Pd-alloy gate, and/or a highly-ordered vertically oriented titanium dioxide (TiO2) nanotube microelectromechanical systems (MEMS) sensors can be incorporated in the welding torch to detect hydrogen levels and/or perform closed loop control of the preheat power source. A hydrogen sensor may also be placed near the preheat chamber as a measure of hydrogen level before depositing the consumable electrode into weld pool to form the weld metal.

Disclosed example apparatus to reduce hydrogen associated with a consumable welding electrode include: a welding-type power source configured to provide welding-type current to a welding-type circuit, in which the welding-type circuit includes a welding-type electrode and a first contact point of a welding torch; and an electrode preheating circuit configured to supply preheating current through a first portion of the welding-type electrode, in which the first portion of the welding-type electrode is located between a wire source supplying the welding-type electrode and the first contact point of the welding torch.

Some example apparatus further include an electrode preheating control circuit configured to control the preheating current based on at least one of a type of the welding-type electrode, a chemistry of the welding-type electrode, a wire diameter, or a gas composition. Some example apparatus further include a hydrogen sensor configured to measure hydrogen at least one of in the welding-type electrode or proximate the welding-type electrode, in which the electrode preheating control circuit is configured to control the preheating current based on a hydrogen measurement from the hydrogen sensor. In some examples, the hydrogen sensor is at least one of a Palladium-based sensor, a diode-based Schottky sensor, or a micromechanical systems-based sensor.

Some example apparatus further include a moisture sensor configured to measure moisture at least one of in the welding-type electrode or proximate the welding-type electrode, in which the electrode preheating control circuit is configured to control the preheating current based on a moisture measurement from the moisture sensor. In some examples, the electrode preheating circuit is configured to provide the preheating current to the electrode preheating circuit via the first contact point and a second contact point. In some examples, the preheating current and the welding-type current have respective polarities that reduce a net current at the second contact point to less than the preheating current and the welding-type current.

Some example apparatus further include a wire cooler configured to cool the welding-type electrode following heating of the welding-type electrode. Some example apparatus further include an electrode preheating control circuit configured to control the preheating current to achieve at least one of a target current, a target voltage, a target power, a target resistance, a target temperature, or a target enthalpy in the welding-type electrode. In some examples, the welding torch includes a vent system to remove hydrogen from a volume proximate the welding-type electrode conducting the preheating current.

In some examples, the electrode preheating circuit includes a second contact point located between the first contact point and the wire source. In some such examples, the second contact point is a drive roll of a wire feeder. In some examples, the second contact point comprises a second contact tip in the welding torch. In some examples, the electrode preheating circuit includes the first contact point and the second contact point. In some examples, the electrode preheating circuit includes a third contact point located between the first contact point and the second contact point.

Disclosed example methods to reduce hydrogen in a welding-type electrode include: providing, via a welding-type power source, welding-type current to a welding-type circuit, in which the welding-type circuit includes a welding-type electrode and a first contact point of a welding torch; and supplying, via an electrode preheating circuit, preheating current through a first portion of the welding-type electrode between a wire source of the welding-type electrode and the first contact point of the welding torch.

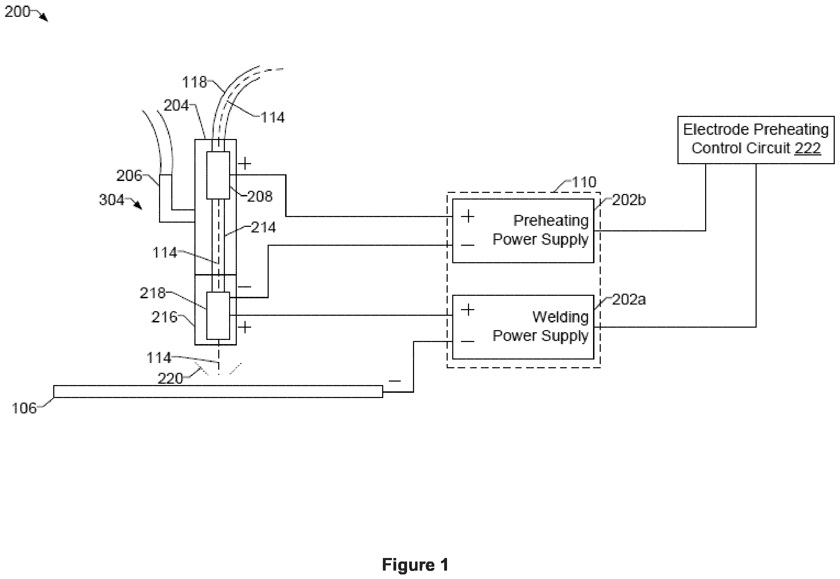

Figure 1 illustrates a functional diagram of an exemplary welding system 200 having a resistive pre-heat. As illustrated, the welding system 200 may comprise a torch body 204, a shielding gas inlet 206, a first contact tip 218, a ceramic guide 214, a gas nozzle 216, and a second contact tip 208.

In some examples, the first contact tip 218 and/or the second contact tip 208 are modular and/or removable so as to be easily serviceable by a user of the welding system 200. For example, the first contact tip 218 and/or the second contact tip 208 may be implemented as replaceable cartridges. In some examples, the welding equipment 110 monitors and indicates that the first contact tip 218 and/or the second contact tip 208 should be replaced, taking into account, for instance, measurements of the used time of the first contact tip 218 and/or the second contact tip 208, temperature(s) of the first contact tip 218 and/or the second contact tip 208, amperage in the first contact tip 218 and/or the second contact tip 208 and/or the wire, voltage between the first contact tip 218 and/or the second contact tip 208 and/or the wire, enthalpy in the wire, and/or any other data.

In operation, the electrode wire 114 passes into the body of the torch 204 through a first contact tip 218 and a second contact tip 208, between which a second power supply 202b generates a preheat current to heat the electrode wire 114. Specifically, the preheat current may enter the electrode wire 114 via the second contact tip 208 and exit via the first contact tip 218. At the first contact tip 218, a welding current may also enter the electrode wire 114. The welding current is generated, or otherwise provided by, a first power supply 202a. The welding current exits the electrode wire 114 via the workpiece 106, which in turn generates the welding arc 220. That is, the electrode wire 114, when energized for welding via a welding current, carries a high electrical potential. When the electrode wire 114 makes contact with a target metal workpiece 106, an electrical circuit is completed and the welding current flows through the electrode wire 114, across the metal work piece(s) 106, and to ground. The welding current causes the electrode wire 114 and the parent metal of the work piece(s) 106 in contact with the electrode wire 114 to melt, thereby joining the work pieces as the melt solidifies. By preheating the electrode wire 114, a welding arc 220 may be generated with drastically reduced arc energy.

The preheat current can range from, for example, 25 A to 400 A. Generally speaking, the preheat current is inversely proportional to the square root of the distance between the two contact tips and/or directly proportional to the electrode wire 114 size for a given rise in electrode temperature. That is, the smaller the distance, the more current needed to achieve a certain temperature rise. The preheat current may flow in either direction between the contact tips 208, 218.

To avoid unwanted kinking, buckling, or jamming of the electrode wire 114, a guide 214 may be provided to guide the electrode wire 114 as it travels from the second contact tip 208 to the first contact tip 218. The guide 214 may be fabricated from ceramic, a dielectric material, a glass-ceramic polycrystalline material, and/or another non-conductive material. The contact tip assembly 200 may further comprise a spring-loaded device, or equivalent device, that reduces wire kinking, buckling, and jamming, while increasing wire contact efficiency by keeping the electrode wire 114 taught and/or straight.

In the illustrated embodiment, both the first contact tip 218 and the second contact tip 208 are present within the body 204 of a welding torch. In other embodiments, however, one or more of the second contact tip 208 and the first contact tip 218 may be positioned at a different location, e.g. outside the body 204 of a welding torch.

In some embodiments, for instance, the second contact tip 208 may be positioned at the wire feeder (e.g., at welding equipment 110) or another extended distance, to introduce the preheat current, in which case the preheat current may exit a contact tip in the torch 204. The contact tip in the torch 204 may be the same, or different, from the contact tip where the welding current is introduced to the electrode wire 114. The preheat contact tip(s) may be further positioned along the electrode wire 114 to facilitate use with Push-Pull Guns, such as those available from Miller Electric of Appleton, Wisconsin. The liner could be made from ceramic rollers so the preheat current could be injected back at the feeder and be a very low value due to the length of the liner.

In some embodiments, the first contact tip 218 and a second contact tip 208 may be positioned on each side of a gooseneck bend. For example, a preheat section may be curved (e.g., non-straight). That is, wire is fed through a section of the torch that has a bend greater than 0 degrees or a neck that would be considered a "gooseneck". The second contact tip 208 may be positioned before the initial bend and the first contact tip 218 after the bend is complete. Such an arrangement may add the benefit to the connectivity of the heated wire moving through the portion of the neck between the two contact tips. Such an arrangement results in a more reliable connection between the two contact tips where an off axis, machined dielectric insert was previously needed.

Generally, the welding current is generated, or otherwise provided by, a first power supply 202a, while the preheat current is generated, or otherwise provided by, a second power supply 202b. The first power supply 202a and the second power supply 202b may ultimately share a common power source (e.g., a common generator or line current connection), but the current from the common power source is converted, inverted, and/or regulated to yield the two separate currents - the preheat current and the welding current. For instance, the preheat operation may be facilitated with a single power source and associated converter circuitry. In which case, three leads may extend from the welding equipment 110 or an auxiliary power line in the welder, which could eliminate the need for the second power supply 202b.

The preheat current and welding current may be DC, AC, pulsed DC, and/or a combination thereof. For example, the welding current may be AC, while the preheat current may be DC, or vice versa. Similarly, the welding current may be DC electrode negative (DCEN) or a variety of other power schemes. In certain aspects, the welding current waveform may be further controlled, including constant voltage, constant current, and/or pulsed (e.g., AccuPulse). In certain aspects, constant voltage and/or constant power, constant penetration, and/or constant enthalpy may be used to facilitate preheat instead of constant current. For example, it may be desirable to control the amount of penetration into the workpiece. In certain aspects, there may be variations in contact tip to work distances that under constant voltage weld processes will increase or decrease the weld current in order to maintain a voltage at or close to the target voltage command, and thus changing the amount of penetration/heat input into the weld piece. By adjusting the amount of preheat current in response to changes to contact tip to work changes the penetration/heat input can be advantageously controlled. Furthermore, penetration can be changed to reflect a desired weld bead/penetration profile. For example, the preheat current may be changed into a plurality of waveforms, such as, but not limited to, a pulse type waveform to achieve the desired weld bead/penetration profile.

The current could be line frequency AC delivered from a simple transformer with primary phase control. Controlling the current and voltage delivered to the preheat section may be simpler using a CC, CV, or constant power depending on how the control is implemented as well as the power supply configuration to do it. In another aspect, the welding power source for consumable arc welding (GMAW and SAW) may include regulating a constant welding current output and adapt wire speed to maintain arc length or arc voltage set-point (e.g., CC+V process control). In yet another aspect, the welding power source may include regulating a constant welding voltage output (or arc length) and adapt wire speed to maintain arc current set-point (e.g., CV+C process control). The CC+V and CV+C process controls allow for accommodation of wire stick-out variation and pre-heat current/temperature variation by adapting wire feed speed (or variable deposition). In yet another aspect, the power source may include regulating a constant welding current output, the feeder maintains constant deposition, and the pre-heat power source adapts preheat current (or pre-heat power) to maintain constant arc voltage (or arc length). It can be appreciated that the addition of pre-heat current/power adds a new degree of freedom to the wire welding processes (GMAW and SAW) that allows flexibility and controllability in maintaining constant weld penetration and weld width (arc current), deposition (wire speed) and process stability (arc length or voltage). These control schemes may be switched during the welding process, for example, CV+C for arc start only, and other control schemes for the main weld.

The welding system 200 may be configured to monitor the exit temperature of the electrode wire 114 between the preheat contact tips (e.g., the preheat temperature), as illustrated, between the first contact tip 218 and the second contact tip 208. The preheat temperature may be monitored using one or more temperature determining devices, such as a thermometer, positioned adjacent the electrode wire 114, or otherwise operably positioned, to facilitate periodic or real-time feedback. Example thermometers may include both contact sensors and non-contact sensors, such as non-contact infrared temperature sensors, thermistors, and/or thermocouples. An infrared thermometer determines temperature from a portion of the thermal radiation emitted by the electrode wire 114 to yield a measured preheat temperature. The temperature determining device may, in addition to or in lieu of the thermometers, comprise one or more sensors and/or algorithms that calculate the preheat temperature of the electrode wire 114. For example, the system may dynamically calculate temperature based on, for example, a current or voltage. In certain aspects, the thermometer may measure the temperature of the dielectric guide or first contact tip to infer the wire temperature.

In operation, the operator may set a target predetermined preheat temperature whereby the welding system 200 dynamically monitors the preheat temperature of the electrode wire 114 and adjusts the preheat current via the second power supply 102b to compensate for any deviation (or other difference) of the measured preheat temperature from the target predetermined preheat temperature. Similarly, controls may be set such that a welding operation cannot be performed until the electrode wire 114 has been preheated to the predetermined preheat temperature.

The example assembly 200 preheats a section of the electrode wire 114 to reduce the presence of hydrogen in the electrode wire 114 prior to welding. In some examples, the assembly 200 may monitor hydrogen levels in the electrode wire 114 and preheat a section of the electrode wire 114 to reduce hydrogen prior to welding. The assembly 200 includes an electrode preheating control circuit 222. The electrode preheating control circuit 222 is operable to control the preheating power supplied by the power supply 202b to maintain a substantially constant heat input to a weld (e.g., a heat input within a range). In some examples, the electrode preheating control circuit 222 controls the preheating power based on estimating the stickout heating of the electrode wire 114 and by modifying the preheating power provided by the power supply 202b based on changes in the estimated stickout heating.

In some examples, the electrode preheating control circuit 222 receives a hydrogen measurement signal from a hydrogen sensor and adjusts the preheat parameters (e.g., current, voltage, power, enthalpy, etc.) of the preheating power supply 202b and/or the welding parameters of the welding power supply 202a.

By preheating the electrode wire 114 to a desired temperature at speed at which the electrode wire 114 is feeding out of the assembly 200, relative to the amount of hydrogen present or allowable, the assembly 200 more easily reduces and/or eliminates excess hydrogen than conventional methods of hydrogen reduction.

The electrode preheating control circuit 222 controls the preheat parameters, such as preheat power, current, voltage and/or joule heating, based on observed baking effectiveness for the type of electrode wire to reduce moisture in the type of electrode wire, and based on the feed speed of the electrode wire 114. For instance, a higher feed rate of the electrode wire 114 may require higher preheat power. Welding with tubular electrodes on butt seams may require less preheat power than tubular electrodes with a joggle joint. Larger diameter tubular wire with more cross-sectional area may require higher preheat power.

The example electrode preheating control circuit 222 may use a look-up table or other memory structure to retrieve preheat parameters based on inputs to the electrode preheating control circuit 222 (e.g., via a user interface or another input method). For example, the electrode preheating control circuit 222 may use a wire feed speed, a wire type (e.g., tubular wire, solid wire, a wire name, etc.), and/or a wire diameter, to identify in the table one or more of a preheating current, a preheating voltage, a preheating enthalpy, a wire temperature, and/or a wire resistance (e.g., indicative of the temperature of the wire) to be used to control the preheating power supply 202b. The wire type may be identified, for example, using a model number, universal product code (UPC), and/or any a physical description of the wire. In addition to diameter, composition, and wire feed speed, the resistance of the wire may also be included as a variable for determining the preheat. For example, the sheath thickness of a tubular wire and/or a fill percentage (e.g., the ratio of core material weight to sheath weight) at least partially determines the resistance of the wire. The preheating distance may be an input, fixed, and/or dynamically controllable and, therefore, may be used as an input variable for the look-up table. The data in the look-up tables may be determined empirically by testing different wire types to determine hydrogen content using different resistive heating levels and/or time periods.

When included, a hydrogen sensor monitors the level of hydrogen on and/or proximate to the electrode wire 114. For example, the hydrogen sensor may be a Palladium (Pd) based sensor such as a Palladium-functionalized carbon nanotube (CNT). Another example implementation of the hydrogen sensor is as a diode-based Schottky sensor with a Pd-alloy gate. Additionally or alternatively, highly-ordered vertically oriented titanium dioxide (TiO2) nanotube microelectromechanical systems (MEMS) sensors may be incorporated in the welding torch to detect low levels (e.g., in parts per million, parts per billion, etc.) of hydrogen in or proximate to the electrode wire 114. The electrode preheating control circuit 222 may perform closed-loop control of the preheating power supply 202b based on the hydrogen measurement received from the hydrogen sensor. A hydrogen sensor may also be placed near a preheat chamber as a measure of hydrogen level before depositing the electrode wire 114 into the weld pool at the workpiece 106 to form the weld metal. A moisture sensor may be used instead of or as a complement to the hydrogen sensor.

The example assembly 200 allows a tubular electrode to be produced at low cost and yet achieve low hydrogen performance. The assembly 200 may also reduce the cost of reducing or preventing hydrogen pick up during production of the electrode wire 114, such as the costs associated with strip steel quality, drawing lube, flux sourcing and storage, and/or other production, storage and/or procurement costs can be minimized. Furthermore, the cost of packaging and/or storage against moisture pick up in the electrode wire 114 can be reduced and the shelf life of the electrode wire 114 can be extended.

Because hydrogen reduction is improved, a greater variety of tubular wires can be selected by fabricators for mechanical properties with hydrogen immunity provided by the example assembly providing wire preheating at the weld torch. The reduction of hydrogen is made easier because it is not dependent on stickout length as in conventional techniques. End users cannot typically regulate stickout length in a consistent manner, so performing hydrogen reduction via preheating allows for a fixed, self-regulated preheat length so that the wire heating will be consistent and not reliant on stickout length. The shorter stickout length also improves the response to shorting and/or stubbing events by the welding power supply 202a. The preheat hydrogen reduction method further eliminates the need to pre-bake the electrode wire 114 for a significant period of time before using the wire 114. The preheat hydrogen reduction method can heat the electrode wire 114 more than possible when using a traditional extended stickout method, further reducing hydrogen levels prior to introduction to the weld than conventional methods.

### Etching methods and systems

In some embodiments, an electrical arc(s) can be used to remove the oxide layer of aluminum welding wire. Aluminum is highly reactive, and forms a surface oxide layer when exposed to atmospheric conditions. The oxide layer contains significant amounts of water from atmospheric humidity. The water provides a source of hydrogen, which can cause porosity in an aluminum weld. Therefore, it is advantageous to remove the oxide layer, and to reduce or prevent the re-formation of the oxide layer after cleaning. Accordingly, disclosed systems and methods may be configured to remove the oxide layer of aluminum welding wire (as well as any other surface contaminant) via electric arc preheating of the wire. Gas is flowed across the wire during the etching process in order to prevent the re-formation of the oxide layer on the aluminum welding wire. Similarly, the disclosed systems and methods may be configured to remove organic contaminants from welding wire during the preheating process. Removing organic contaminants prevents weld defects caused by "dirty" welding wire, which can include porosity in the weld.

Disclosed examples involve etching the wire after unwinding from the wire spool and prior to the arc. For example, the wire may be etched via an electric arc, e.g. formed by one or more tungsten electrodes, located at any points between the wire source and the arc. Etching a welding wire provides a number of potential benefits, which are described in U.S. Patent Application No. 16/553,522, filed August 28, 2019, and entitled "Systems and Methods for Wire Surface Oxidation Removal and/or Wire Preheating Using a Tungsten Arc".

In some embodiments, the system may be configured to etch a welding wire via electric arc preheating. The system contains one or more tungsten electrodes which preheat the fed welding wire via arc wire heating. In the welding type system, the one or more tungsten electrodes may be connected to the welding power supply to provide preheating power and/or to a separate source of preheating power. In some examples, the one or more tungsten electrodes in the welding torch may be connected to one or more dedicated preheating power sources.

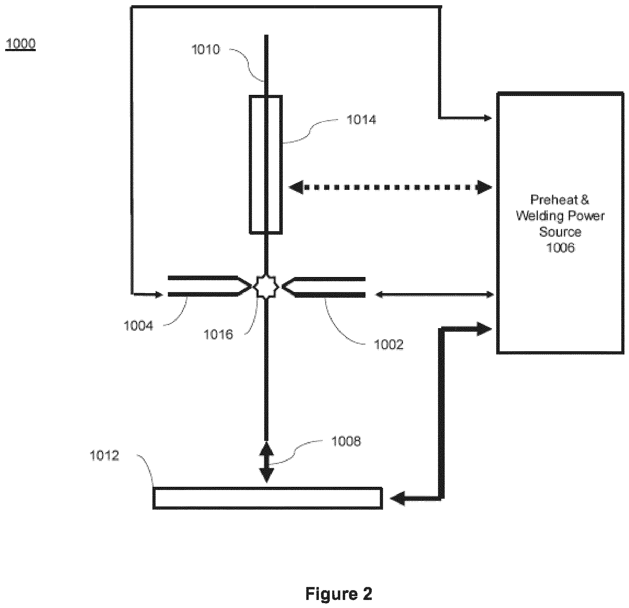

FIG. 2 is a block diagram of an exemplary electric arc preheating system 1000 such as may be used for etching an aluminum wire. Preheating system 1000 includes a first tungsten electrode 1002 and a second tungsten electrode 1004. Each tungsten electrode 1002 and 1006 is electrically connected to the preheating power source 1006. The preheating power source 1006 is also a welding power source which provides welding power which provides power for a welding arc 1008 between welding wire 1010 and a workpiece 1012. In other embodiments, one or more of tungsten electrodes 1002 and 1006 may instead be electrically connected to one or more dedicated preheating power sources.

Welding wire 1010 is fed through a contact tip 1014 and delivered to a workpiece 1012. The contact tip 1014 is connected to the welding power source 1006 in order to provide power for a welding arc 1008 between the welding wire 1010 and the workpiece 1012. The workpiece 1012 is electrically connected to the power source 1006 in order to complete a circuit between the power source 1006, the contact tip 1014, and the welding wire 1010. In some examples, the welding wire 1010 is preheated by an electric arc 1016 between the first tungsten electrode 1002 and the second tungsten electrode 1004 through which the welding wire 1010 passes. In some examples, the electric arc 1016 includes a first arc from the first tungsten electrode 1002 to the welding wire 1010, and a second arc from the welding wire 1010 to the second tungsten electrode 1004, or vice versa.

In the illustrated embodiment, the tungsten electrodes 1002 and 1004 are positioned after the contact tip 1014 (i.e., the welding wire 1010 is preheated and etched downstream from the contact tip 1014). In other embodiments, however, the tungsten electrodes 1002 and 1004 may be positioned before the contact tip 1014 (i.e., the welding wire 1010 is preheated and etched upstream from the contact tip 1014).

As shown in the illustrated embodiment, the first tungsten electrode 1002 and the second tungsten electrode 1004 may be offset circumferentially (i.e. by 180 degrees) so as to etch both sides of an aluminum welding wire 1010. In some embodiments, the system 1000 may comprise greater than two electrodes. For instance, in some embodiments, the system 1000 may further comprise a third tungsten electrode. The first tungsten electrode, the second tungsten electrode, and the third tungsten electrode may be offset circumferentially (i.e. by 120 degrees) so as to evenly etch an aluminum welding wire 1010. In some embodiments, the system 1000 may further comprise a fourth tungsten electrode. The first tungsten electrode, the second tungsten electrode, the third tungsten electrode, and the fourth tungsten electrode may be offset circumferentially (i.e. by 90 degrees) so as to evenly etch an aluminum welding wire 1010.

When a preheating system is being used to etch, one or both of the tungsten electrodes may be set to be electrode positive. Arcs using electrode positive polarity (e.g., the tungsten electrodes have a positive voltage relative to the electrode wire) more readily remove oxidation layers on aluminum welding wire compared to electrode negative polarity. Preheating aluminum welding wire with an electrode positive arc therefore removes the oxidation layer from the aluminum welding wire. In some examples, the electrodes may be connected to alternating current power sources. When connected to alternating current power sources, the electric arc(s) between the tungsten electrodes will have a positive component, and the positive component removes the surface oxidation of aluminum welding wire. To remove surface oxidation from aluminum welding wire, tungsten electrodes can be connected to a power source with a positive time component. In some embodiments, the preheating system may be connected to a polyphase power source (e.g., three electrodes are connected to the three phases of a three-phase power source). Since polyphase systems utilize alternating current, when polyphase systems are utilized, at any given time at least one arc is electrode positive, which facilitates removal of contaminants from aluminum welding wire

### Isolation of the pre-treating gas outlet from the shielding gas

In order to facilitate the removal of hydrogen from a wire 114 during a pre-treating process and/or to prevent the re-formation of an oxide layer on an aluminum welding wire after etching, a gas flow may be provided around the wire 114. For simplicity, this gas may be referred to herein as a pre-heating gas, regardless of whether the pre-treatment involves pre-heating, etching, or both. Because the shielding gas used in the welding operation is capable as operating as the pre-heating gas, the shielding gas for the welding operation has previously been used as the pre-heating gas. As shown in Figure 1, for instance, the shielding gas inlet 206 is positioned upstream of at least a portion of the pre-heating zone, e.g. upstream of the first contact tip 218. However, it has presently been recognized that use of the shielding gas as the pre-heating gas may suffer from a significant drawback.

Hydrogen and/or other contaminants removed from the wire 114 during the pre-treating step is transferred into and carried by the gas that exits the pre-treating zone. Therefore, when the shielding gas for the welding operation is utilized as the pre-treating gas, the hydrogen and/or other contaminants from the wire are pushed toward the welding arc 220. Hydrogen from the shielding gas can thus become trapped in a weld, much in the same way that hydrogen from the wire can become trapped in a weld, leading to the same problems of cracking, brittleness, and/or porosity. Embodiments of the present disclosure provide methods and systems by which the pre-treating gas can be separated from the shielding gas, such that the shielding gas that is directed toward the welding arc 220 does not contain hydrogen contaminants from the pre-treating step.

Embodiments of the present disclosure thereby provide a multiple flowpaths for the shielding gas. The multiple flowpath system comprises a first flowpath by which a first portion of the shielding gas surrounds the electrode wire 114 during the pre-treating step and a second flowpath by which a second portion of the shielding gas surrounds the electrode wire 114 at the distal end of the torch 204. The first portion of the shielding gas, i.e. the portion of the shielding gas that operates as the pre-treating gas, exits a pre-heating zone and is desirably directed away from the welding arc 220, e.g. away from the distal end of the torch. The second portion of the shielding gas, i.e. the portion of the shielding gas that is used for the welding operation, exits through the distal end of the torch by any conventional manner (e.g., a nozzle) and is free from hydrogen contaminants released during the wire pre-treatment.

Other embodiments of the present disclosure utilize a pre-treating gas that is distinct from the shielding gas for the welding operation. Those embodiments utilize a multiple flowpath system that involves independent gas inlets. The system comprises a first gas flowpath by which a pre-treating gas surrounds the electrode wire 114 during the pre-treating step and a second gas flowpath by which a shielding gas surrounds the electrode wire 114 at the distal end of the torch 204. The gas inlet associated with the first gas flowpath is distinct from the gas inlet associated with the second gas flowpath, such that the pre-treating gas may be a distinct gas from the shielding gas. The pre-treating gas exiting the first flowpath is desirably directed away from the welding arc 220, e.g. away from the distal end of the torch. The shielding gas exits the second flowpath through the distal end of the torch by any conventional manner (e.g. nozzle) and is free from hydrogen contaminants released during the wire pre-treatment.

The shielding gas can also be utilized as the pre-treating gas in a system having distinct gas inlets. For instance, a gas line supplying the shielding gas could simply be split into first and second shielding gas lines, with the first being attached to the distinct pre-treating gas inlet and the second being attached to the distinct shielding gas inlet.

Embodiments of the present disclosure are directed to a welding system or assembly 200 or a welding torch 204 comprising a pre-heating gas chamber 226 and a shielding gas chamber 236. For simplicity, the term pre-heating gas chamber 226 will be used throughout, although it is to be understood that the term applies equally to the gas chamber in which wire etching is performed. The pre-heating gas chamber 226 surrounds at least a first portion of the electrode wire 114. The shielding gas chamber 236 surrounds at least a second portion of the electrode wire 114. The second portion of the electrode wire 114 is downstream from the first portion of the electrode wire, i.e. located closer to the distal end of the torch 224 and to the welding arc 220.

In some embodiments, the pre-heating gas chamber 226 and the shielding gas chamber 228 may both be positioned within the welding device, e.g. the torch 204. For instance, in some embodiments, the first contact point 218 and the second contact point 208 of a resistive preheat system (or the first electrode 1002 and second electrode 1004 of an etching system) may be positioned within the torch body 204. Embodiments of the present disclosure are directed to a welding assembly 200 that includes a welding torch 204 comprising the pre-heating gas chamber 226 and the shielding gas chamber 228 positioned within the torch 204, as described herein. In other embodiments, at least a portion of the pre-heating gas chamber 226 may be external to the torch body 204. For example, in some embodiments, the second contact point 208 or both the second contact point and the first contact point 218 (or similarly, one or more of the first and second electrodes 1002, 1004) may be positioned upstream of the welding device, e.g. the torch body 204. Embodiments of the present disclosure are also directed to a welding assembly 200 that includes a pre-heating gas chamber 226, at least a portion of which is external to the welding device, e.g. torch body 204, itself.

The pre-heating gas chamber 226 comprises a gas inlet 227 and a gas outlet 229. The shielding gas chamber 236 also comprises a gas inlet 237 and a gas outlet 239. In some embodiments, the gas inlet 227 of the pre-heating chamber 226 may be fluidly connected to the gas inlet 237 of the shielding gas chamber 236. In other embodiments, the gas inlet 227 of the pre-heating chamber 226 may not be fluidly connected to the gas inlet 237 of the shielding gas chamber 236. In some embodiments, a single gas supply may be used as both the pre-heating gas and the shielding gas. In other embodiments, a first gas supply may be provided for use as the pre-heating gas and a second, distinct, gas supply may be provided for use as the shielding gas.

In some welding operations, for instance, the shielding gas may be relatively expensive. Accordingly, by providing a user with the ability to utilize a pre-heating gas that is separate and distinct from the shielding gas, embodiments of the present disclosure provide significant benefits. In other embodiments, the ease of operation provided by a system having a single gas supply connection may be desired.

In some embodiments, a welding device may be configured so that a user may alternate between independent gas inlets 227, 237 and fluidly connected gas inlets. In that way, the system may be operated in either manner, depending on a variety of considerations including the economic considerations of the welding operation being performed, the experience of the user, the availability of a distinct pre-heating gas supply, and the like. For example, in some embodiments, the system may comprise a component, such as a controllable baffle, by which the inlet 227 of the pre-heating chamber 226 and the inlet 237 of the shielding gas chamber 236 may be brought into either a first orientation, in which the inlets 227, 237 are fluidly connected (allowing for a single gas supply), or a second orientation, in which the inlets are not fluidly connected (allowing for a distinct pre-heating gas supply).

While the inlet 227 of the pre-heating chamber 226 and the inlet 237 of the shielding gas chamber 236 may be fluidly connected, the outlet 229 of the pre-heating chamber 226 is desirably distinct from the outlet 239 of the shielding gas chamber 236. The outlet 239 of the shielding gas chamber 236 is configured so that the shielding gas that flows through the outlet 239 flows around a portion of the wire 114 that extends from the distal end 224 of the welding device 204. In this way, the shielding gas is directed toward the weld pool. In contrast, it is desirable to direct the pre-heating gas away from the weld pool. In particular, the outlet 227 of the pre-heating chamber 226 is desirably configured such that pre-heating gas that flows through the outlet is directed away from the distal end 224 of the welding implement 204. Put another way, the outlet 227 of the pre-heating chamber 226 is configured such that pre-heating gas that flows through the outlet is directed away from the outlet 229 of the pre-heating chamber 226.

In some embodiments, the gas exiting the outlet 229 of the pre-heating chamber 226 may be vented to the atmosphere. The venting preferably occurs in a direction away from the portion of the wire extending from the distal end of the welding implement 204. Where the pre-heating chamber 226 is positioned within the torch 204, for instance, the outlet 229 of the pre-heating chamber 226 must be positioned so that the gas flows out of a port in the body of the torch 204 at a distance from the distal end 224. Desirably, the outlet 229 may also be oriented to direct the gas at an angle of least 25 degrees from the distal end of the torch 224, alternatively at least 35 degrees, alternatively at least 45 degrees, alternatively at least 60 degrees, alternatively at least 75 degrees, alternatively at least 90 degrees. In other embodiments, the gas exiting the outlet 229 of the pre-heating chamber 226 may flow into a gas line, by which the used pre-heating gas may be transported into a collection container, recycled, or the like.

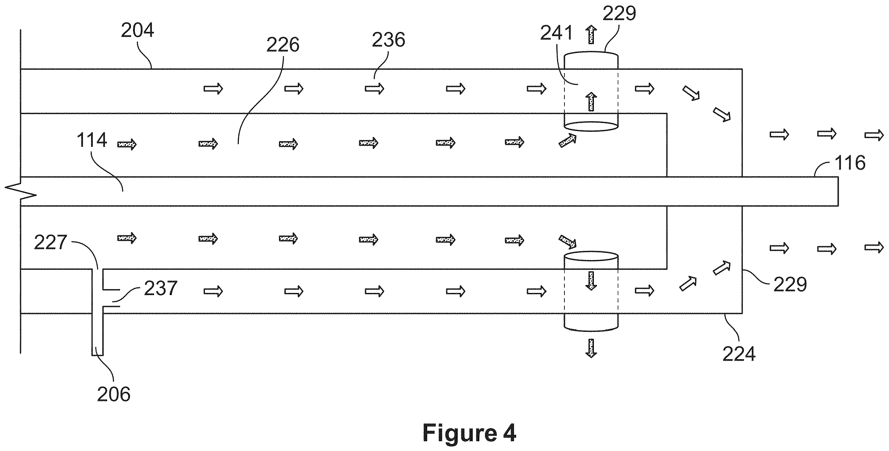

In some embodiments, the pre-heating chamber 226 may be at least partially nested within at least a portion of the shielding gas chamber 236. An example of such an embodiment is illustrated in Figure 4. In such an embodiment, the outlet 229 of the pre-heating chamber 226 may comprise one or more bypass ducts 241 extending through the shielding gas chamber 236. In this manner, the pre-heating gas exiting the pre-heating chamber 226 may be prevented from mixing with the shielding gas flowing through the shielding gas chamber 236 and directed toward the weld.

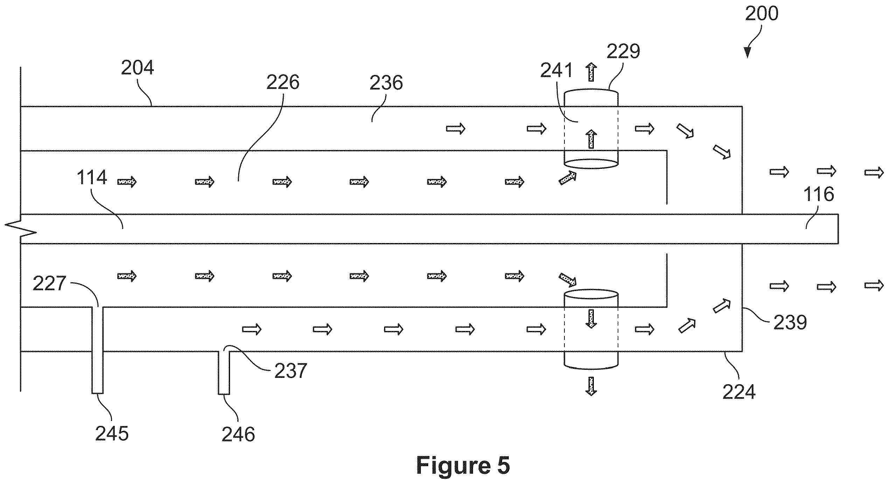

In the embodiment illustrated in Figure 4, the inlet 227 of the pre-heating chamber 226 and the inlet 237 of the shielding gas chamber 236 are shown as being operatively connected so that a gas supply line can be connected to the torch 204 at a single connection port 206 in order to supply gas into both chambers. However, as explained previously, in other embodiments, the inlet 227 of the pre-heating chamber 226 may be associated with a first gas supply connection port 245 and the inlet 237 of the shielding gas chamber 237 may be associated with a second, distinct gas supply connection port 246. Such an embodiment is illustrated, for example, in Figure 5. In yet other embodiments, the system may be configured to allow for the connection of both a single gas supply line and separate gas supply lines.

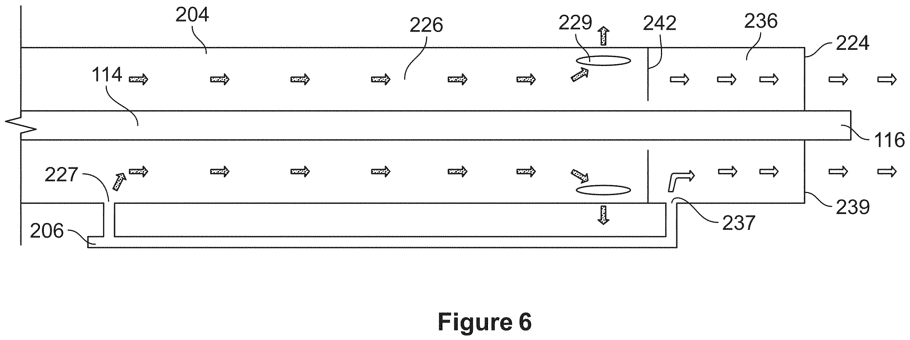

In other embodiments, the pre-heating chamber 226 may be positioned upstream from the shielding gas chamber 236. An example of such an embodiment is illustrated in Figure 6. In such an embodiment, a downstream end of the pre-heating chamber 226 may be separated from an upstream end of the shielding gas chamber 236 by one or more baffles 242. In this manner, the pre-heating gas flowing through the outlet 229 of the pre-heating chamber 226 may be exit the welding device 204 upstream from the shielding gas chamber 236.

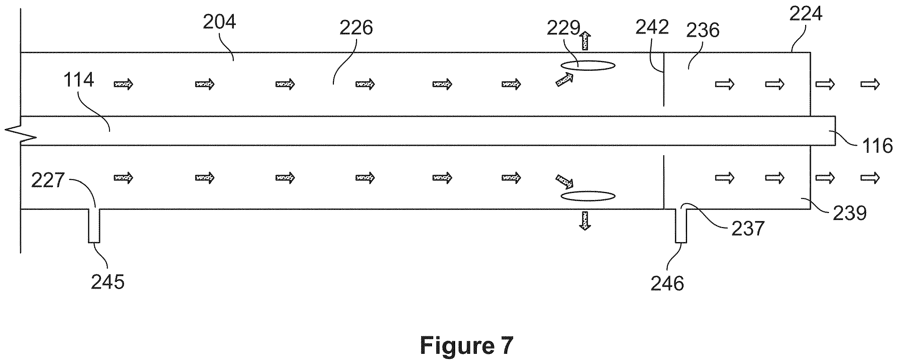

In the embodiment illustrated in Figure 6, the inlet 227 of the pre-heating chamber 226 and the inlet 237 of the shielding gas chamber 236 are shown as being operatively connected so that a gas supply line can be connected to the torch 204 at a single connection port 206 in order to supply gas into both chambers. However, as explained previously, in other embodiments, the inlet 227 of the pre-heating chamber 226 may be associated with a first gas supply connection port 245 and the inlet 237 of the shielding gas chamber 237 may be associated with a second, distinct gas supply connection port 246. Such an embodiment is illustrated, for example, in Figure 7. In yet other embodiments, the system may be configured to allow for the connection of both a single gas supply line and separate gas supply lines.

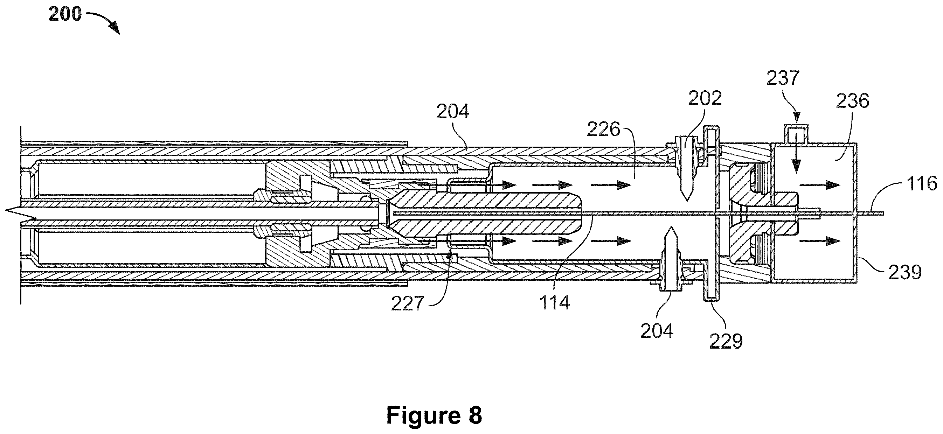

Both the nested arrangement illustrated in Figures 4-5 and the upstream/downstream arrangement illustrated in Figures 6-7 are applicable for any type of pre-treatment, including both pre-heating of an electrode wire and etching of a filler wire such as an aluminum wire. Figure 8 shows an embodiment of a system for etching a filler wire 114 using electrodes 202 and 204 in which the pre-treating chamber 226 is isolated from the shielding gas chamber 236. In Figure 8, the pre-treating chamber 226 is positioned upstream of the shielding gas chamber 236. However, in an alternative, non-illustrated embodiment, the pre-treating chamber 226 may be at least partially nested within the shielding gas chamber 236.

Further, although a nested arrangement of the pre-treatment chamber 226 and the shielding gas chamber 236 and an upstream/downstream arrangement of the pre-treatment chamber 226 and shielding gas chamber 236 are shown in illustrated embodiments, other manners of isolating the outlet of the pre-treating chamber 226 from the outlet of the shielding gas chamber 236 are contemplated without departing from the scope of the present disclosure.

### Enhancing hydrogen removal from the wire

Where the pre-treatment step is performed in a manner in which the gas exiting the pre-treatment is isolated from the shielding gas of the welding operation, the operating parameters of the pre-treatment may also be altered in order to provide for a more efficient and effective removal of hydrogen from the wire. For instance, where the gas used during the pre-heating or etching process was then used as the shielding gas for the welding operation, one of skill in the art would have generally sought to prevent or minimize turbulence, since turbulence in shielding gas is undesirable. Because the flow of gas during (and after) the pre-treatment was generally relatively laminar, the hydrogen (and other contaminants) removed from the wire was transported away from the wire by diffusion.

According to embodiments of the present disclosure, on the other hand, the pre-treatment gas is brought to a highly turbulent state. The turbulence of the gas promotes the movement of hydrogen away from the wire during (and after) the pre-treatment.

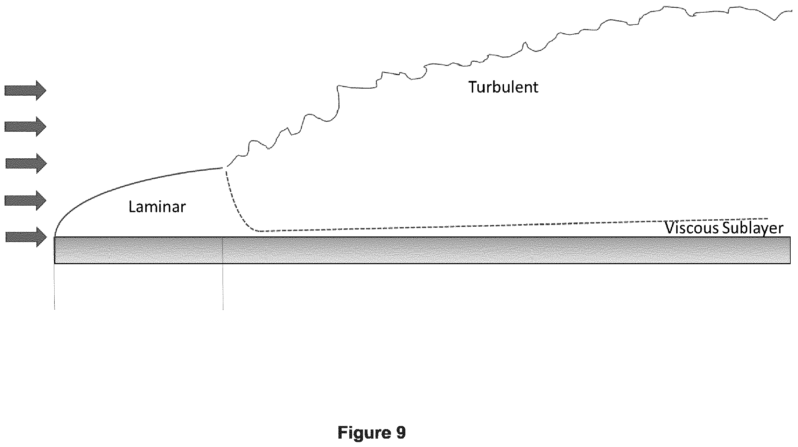

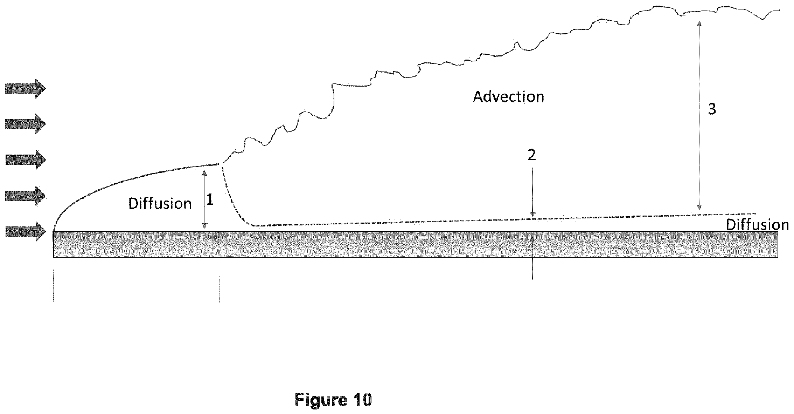

This effect is illustrated in Figures 9 and 10. Namely, as shown in Figure 9, above a critical Reynolds number a turbulent flow having a thin the viscous sub-layer is produced. The thin viscous sub-layer creates a large concentration and temperature gradient in close vicinity to the wire. These large gradients and the turbulence of the flow above the thin viscous layer assists in transporting the hydrogen (removed from the wire) away from the wire. Specifically, as shown in Figure 10, in the turbulent flow region above the wire, the hydrogen will be removed by the advection bulk transport. This advection transport is significantly more effective than diffusion at transporting hydrogen and other removed contaminants away from the wire.

The quicker that the hydrogen (and other contaminants) can be transported away from the wire, the less likely it becomes that the hydrogen will either be taken back up by the wire or travel with the wire to the weld pool, where it could be taken up into the weld. Accordingly, embodiments of the present disclosure provide an enhanced wire cleaning process.

In some embodiments, a method of removing hydrogen from a filler wire involves pre-treating a wire to remove hydrogen, such as by the pre-heating or etching processes described herein, as the wire passes through a cleaning chamber 226. A gas is also passed through the cleaning chamber 226 from a gas inlet 227 to a gas outlet 229. The gas is caused to have a turbulent flow as it passes through the cleaning chamber 226.

The gas may be caused to have a turbulent flow through any number of mechanisms, as would generally be understood by those of skill in the art. For example, in some embodiments, the flow of the gas may be impinged at or near the inlet 227 to the cleaning chamber 226. The flow of gas may be impinged, for example, by a gas inlet having a decreased cross-section, an obstruction to flow, a roughened or textured surface, or a combination thereof. In some embodiments, the flowrate of the gas may simply be increased to achieve a desired degree of turbulence. A drawback to this approach, however, is that the gas supply will be more quickly spent. Therefore, it is desirable that the cleaning chamber 226 or the gas inlet 227 to the cleaning chamber have one or more flow impingers that are configured to create turbulent gas flow within the cleaning chamber.

The gas passing through the wire pre-cleaning chamber 226 may be caused to have a Reynolds number of at least 2100, alternatively at least 2500, alternatively at least 2800, alternatively at least 3000, alternatively at least 3200, alternatively at least 3500, alternatively at least 3800, alternatively at least 4000. In general, the higher the Reynolds number of the gas flow in the pre-cleaning chamber 226, the greater the advection transport effect, and the quicker the contaminants removed from the wire will be transported away from the surface of the wire.

Regarding the methods described herein, the system (e.g. the cleaning chamber 226 and shielding gas chamber 236) may be arranged as in any of the above-described and illustrated embodiments, although the method is not limited to any specific arrangement of the system unless expressly stated.

While the present method and system has been described with reference to certain implementations, it will be understood by those skilled in the art that the present method and/or system are not limited to the particular implementations but rather more by the scope of the present invention as defined by the appended claims.

## Claims

1. A method of removing hydrogen from a filler wire (114) that is utilized in a welding operation, the method comprising:
providing a welding torch (204); and
passing the wire (114) through a pre-treatment chamber (226) which comprises a gas inlet (227) and a gas outlet (229),
within the pre-treatment chamber (226),
i. treating the wire (114) to release hydrogen, and
ii. creating a turbulent flow of pre-treatment gas through the pre-treatment chamber (226), such that the pre-treatment gas transports the released hydrogen away from the wire (114);
**characterised in that**:
the method further comprises isolating the pre-treatment gas flowing through the gas outlet (229) of the pre-treatment chamber (226) from a shielding gas of a welding operation;
**in that** the step of creating a turbulent flow of pre-treatment gas through the pre-treatment chamber (226) comprises impinging the flow of pre-treatment gas at or near the gas inlet (227),
**in that** an outlet (239) of a shielding gas chamber (236) for the shielding gas is at a distal end (224) of the welding torch (204), and
**in that** the pre-treatment chamber (226) is positioned within the welding torch (204), and the gas outlet (229) of the pre-treatment chamber (226) is positioned at a distance from the distal end (224) of the welding torch (204) and directs the pre-treatment gas away from the distal end (224) of the welding torch (204).

2. The method of claim 1, wherein the treating step comprises pre-heating the wire (114) to release hydrogen.

3. The method of claim 2, wherein pre-heating the wire (114) comprises creating a wire pre-heating circuit comprising a first contact tip (218), a second contact tip (208), and a section of the wire (114) between the first and second contact tips (218, 208).

4. The method of claim 1, wherein the treating step comprises etching the wire (114) to release hydrogen; and optionally wherein etching the wire (114) comprises the creation of an electric arc.

5. The method of claim 1, wherein the gas in the pre-treatment chamber (226) has a Reynolds number of at least 2100, preferably at least 2800, most preferably at least 4000.

6. The method of claim 1, wherein the gas inlet (227) comprises a decreased cross-section, an obstruction to flow, a textured surface, or a combination thereof.

7. A welding system comprising:
a welding torch (204);
a filler wire (114);
a pre-treatment chamber (226) surrounding at least a portion of the wire (114), the pre-treatment chamber (226) comprising a gas inlet (227) and a gas outlet (229); and
one or more flow impingers at or near the gas inlet (227) configured to create turbulent flow of pre-treatment gas within the pre-treatment chamber (226);
**characterised in that** the welding system comprises
a shielding gas chamber (236);
**in that** the gas outlet (229) of the pre-treatment chamber (226) is isolated from the shielding gas chamber (236), and wherein the pre-treatment chamber (226) is positioned within the welding torch (204); and
**in that** an outlet (239) of the shielding gas chamber (236) is positioned at a distal end (224) of the welding torch (204), and the gas outlet (229) of the pre-treatment chamber (226) is positioned at a distance from the distal end (224) of the welding torch (204) and directs the pre-treatment gas away from the distal end (224) of the welding torch (204).

8. The welding system of claim 7, wherein the one or more flow impingers comprise a decreased cross-section, an obstruction to flow, a textured surface, or a combination thereof.

9. The welding system of claim 7, further comprising a wire pre-heating circuit within the pre-treatment chamber (226); and optionally wherein the wire pre-heating circuit comprises a first contact tip (218), a second contact tip (208), and a section of the wire (114) between the first and second contact tips (281, 208).

10. The welding system of claim 7, further comprising wire etching electrodes (1002, 1004) within the pre-treatment chamber (226).

## Patentansprüche

1. Verfahren zum Entfernen von Wasserstoff aus einem Fülldraht (114), der in einem Schweißvorgang verwendet wird, das Verfahren aufweisend:
Bereitstellen eines Schweißbrenners (204); und
Führen des Drahtes (114) durch eine Vorbehandlungskammer (226), die einen Gaseinlass (227) und einen Gasauslass (229) aufweist,
innerhalb der Vorbehandlungskammer (226),
i. Behandeln des Drahtes (114), um Wasserstoff freizusetzen, und
ii. Erzeugen einer turbulenten Strömung von Vorbehandlungsgas durch die Vorbehandlungskammer (226), sodass das Vorbehandlungsgas den freigesetzten Wasserstoff von dem Draht (114) weg transportiert;
**dadurch gekennzeichnet, dass**:
das Verfahren ferner das Isolieren des Vorbehandlungsgases, das durch den Gasauslass (229) der Vorbehandlungskammer (226) strömt, von einem Schutzgas eines Schweißvorgangs aufweist;
der Schritt des Erzeugens einer turbulenten Strömung von Vorbehandlungsgas durch die Vorbehandlungskammer (226) das Auftreffen der Strömung von Vorbehandlungsgas an oder nahe dem Gaseinlass (227) aufweist,
sich ein Auslass (239) einer Schutzgaskammer (236) für das Schutzgas an einem distalen Ende (224) des Schweißbrenners (204) befindet, und
die Vorbehandlungskammer (226) innerhalb des Schweißbrenners (204) angeordnet ist und der Gasauslass (229) der Vorbehandlungskammer (226) in einem Abstand von dem distalen Ende (224) des Schweißbrenners (204) angeordnet ist und das Vorbehandlungsgas von dem distalen Ende (224) des Schweißbrenners (204) weg leitet.

2. Verfahren nach Anspruch 1, wobei der Behandlungsschritt das Vorheizen des Drahts (114) zum Freisetzen von Wasserstoff aufweist.

3. Verfahren nach Anspruch 2, wobei das Vorheizen des Drahts (114) das Erzeugen einer Drahtvorheizschaltung aufweist, die eine erste Kontaktspitze (218), eine zweite Kontaktspitze (208) und einen Abschnitt des Drahts (114) zwischen der ersten und der zweiten Kontaktspitze (218, 208) aufweist.

4. Verfahren nach Anspruch 1, wobei der Behandlungsschritt das Ätzen des Drahts (114) zum Freisetzen von Wasserstoff aufweist; und wobei das Ätzen des Drahts (114) optional das Erzeugen eines Lichtbogens aufweist.

5. Verfahren nach Anspruch 1, wobei das Gas in der Vorbehandlungskammer (226) eine Reynolds-Zahl von mindestens 2100, bevorzugt mindestens 2800, am bevorzugtesten mindestens 4000 aufweist.

6. Verfahren nach Anspruch 1, wobei der Gaseinlass (227) einen verringerten Querschnitt, eine Strömungsbehinderung, eine strukturierte Oberfläche oder eine Kombination davon aufweist.

7. Schweißsystem, aufweisend:
einen Schweißbrenner (204);
einen Fülldraht (114);
eine Vorbehandlungskammer (226), die mindestens einen Teil des Drahts (114) umgibt, wobei die Vorbehandlungskammer (226) einen Gaseinlass (227) und einen Gasauslass (229) aufweist; und
ein oder mehrere Strömungsauftreffelemente an oder in der Nähe des Gaseinlasses (227), die so konfiguriert sind, dass sie eine turbulente Strömung von Vorbehandlungsgas innerhalb der Vorbehandlungskammer (226) erzeugen;
**dadurch gekennzeichnet, dass** das Schweißsystem
eine Schutzgaskammer (236) aufweist;
dadurch, dass der Gasauslass (229) der Vorbehandlungskammer (226) von der Schutzgaskammer (236) isoliert ist, und wobei die Vorbehandlungskammer (226) innerhalb des Schweißbrenners (204) angeordnet ist; und
dadurch, dass ein Auslass (239) der Schutzgaskammer (236) an einem distalen Ende (224) des Schweißbrenners (204) angeordnet ist und der Gasauslass (229) der Vorbehandlungskammer (226) in einem Abstand von dem distalen Ende (224) des Schweißbrenners (204) angeordnet ist und das Vorbehandlungsgas von dem distalen Ende (224) des Schweißbrenners (204) weg leitet.

8. Schweißsystem nach Anspruch 7, wobei das eine oder die mehreren Strömungsauftreffelemente einen verringerten Querschnitt, eine Strömungsbehinderung, eine strukturierte Oberfläche oder eine Kombination davon aufweisen.

9. Schweißsystem nach Anspruch 7, ferner aufweisend eine Drahtvorheizschaltung innerhalb der Vorbehandlungskammer (226); und wobei die Drahtvorheizschaltung optional eine erste Kontaktspitze (218), eine zweite Kontaktspitze (208) und einen Abschnitt des Drahts (114) zwischen der ersten und der zweiten Kontaktspitze (281, 208) aufweist.

10. Schweißsystem nach Anspruch 7, ferner aufweisend Drahtätzelektroden (1002, 1004) innerhalb der Vorbehandlungskammer (226).

## Revendications

1. Procédé d'élimination d'hydrogène d'un fil d'apport (114) qui est utilisé dans une opération de soudage, le procédé comprenant :
la fourniture d'un chalumeau de soudage (204) ; et
le passage du fil (114) à travers une chambre de prétraitement (226) qui comprend une entrée de gaz (227) et une sortie de gaz (229),
au sein de la chambre de prétraitement (226),
i. le traitement du fil (114) pour libérer de l'hydrogène, et
ii. la création d'un écoulement turbulent de gaz de prétraitement à travers la chambre de prétraitement (226), de telle sorte que le gaz de prétraitement transporte l'hydrogène libéré à l'écart du fil (114) ;
**caractérisé en ce que** :
le procédé comprend en outre l'isolation du gaz de prétraitement s'écoulant à travers la sortie de gaz (229) de la chambre de prétraitement (226) d'un gaz protecteur d'une opération de soudage ;
**en ce que** l'étape de création d'un écoulement turbulent de gaz de prétraitement à travers la chambre de prétraitement (226) comprend l'impact de l'écoulement de gaz de prétraitement au niveau ou près de l'entrée de gaz (227),
**en ce qu'**une sortie (239) d'une chambre de gaz protecteur (236) pour le gaz protecteur est au niveau d'une extrémité distale (224) du chalumeau de soudage (204), et
**en ce que** la chambre de prétraitement (226) est positionnée au sein du chalumeau de soudage (204), et la sortie de gaz (229) de la chambre de prétraitement (226) est positionnée à une distance de l'extrémité distale (224) du chalumeau de soudage (204) et dirige le gaz de prétraitement à l'écart de l'extrémité distale (224) du chalumeau de soudage (204).

2. Procédé selon la revendication 1, dans lequel l'étape de traitement comprend le préchauffage du fil (114) pour libérer de l'hydrogène.

3. Procédé selon la revendication 2, dans lequel le préchauffage du fil (114) comprend la création d'un circuit de préchauffage de fil comprenant une première pointe de contact (218), une deuxième pointe de contact (208) et une section du fil (114) entre les première et deuxième pointes de contact (218, 208).

4. Procédé selon la revendication 1, dans lequel l'étape de traitement comprend l'attaque du fil (114) pour libérer de l'hydrogène ; et facultativement dans lequel l'attaque du fil (114) comprend la création d'un arc électrique.

5. Procédé selon la revendication 1, dans lequel le gaz dans la chambre de prétraitement (226) a un nombre de Reynolds d'au moins 2100, de préférence d'au moins 2800, de manière davantage préférée d'au moins 4000.

6. Procédé selon la revendication 1, dans lequel l'entrée de gaz (227) comprend une section transversale réduite, une obstruction à l'écoulement, une surface texturée ou une combinaison de celles-ci .

7. Système de soudage, comprenant :
un chalumeau de soudage (204) ;
un fil d'apport (114) ;
une chambre de prétraitement (226) entourant au moins une portion du fil (114), la chambre de prétraitement (226) comprenant une entrée de gaz (227) et une sortie de gaz (229) ; et
un ou plusieurs dispositifs d'impact de flux au niveau ou près de l'entrée de gaz (227) configurés pour créer un écoulement turbulent de gaz de prétraitement au sein de la chambre de prétraitement (226) ;
**caractérisé en ce que** le système de soudage comprend
une chambre de gaz protecteur (236) ;
**en ce que** la sortie de gaz (229) de la chambre de prétraitement (226) est isolée de la chambre de gaz protecteur (236), et dans lequel la chambre de prétraitement (226) est positionnée au sein du chalumeau de soudage (204) ; et
**en ce que** une sortie (239) de la chambre de gaz protecteur (236) est positionnée à une extrémité distale (224) du chalumeau de soudage (204), et la sortie de gaz (229) de la chambre de prétraitement (226) est positionnée à une distance de l'extrémité distale (224) du chalumeau de soudage (204) et dirige le gaz de prétraitement à l'écart de l'extrémité distale (224) du chalumeau de soudage (204).

8. Système de soudage selon la revendication 7, dans lequel les un ou plusieurs dispositifs d'impact d'écoulement comprennent une section transversale réduite, une obstruction à l'écoulement, une surface texturée ou une combinaison de celles-ci.

9. Système de soudage selon la revendication 7, comprenant en outre un circuit de préchauffage de fil au sein de la chambre de prétraitement (226) ; et facultativement dans lequel le circuit de préchauffage de fil comprend une première pointe de contact (218), une deuxième pointe de contact (208) et une section du fil (114) entre les première et deuxième pointes de contact (281, 208).

10. Système de soudage selon la revendication 7, comprenant en outre des électrodes d'attaque de fil (1002, 1004) au sein de la chambre de prétraitement (226).
